# EUROPÄISCHE PATENTSCHRIFT

(11) **EP 1 593 921 B1**
(45) Veröffentlichungstag und Bekanntmachung des Hinweises auf die Patenterteilung: **30.12.2009**
(21) Anmeldenummer: 04010447.3
(22) Anmeldetag: 03.05.2004
(51) Int. Cl.: F26B 21/08, F26B 23/00

(54) **Vorrichtung zum Trocknen von Holz**
Apparatus for drying wood.
Dispositif de séchage de bois

(43) Veröffentlichungstag der Anmeldung: 09.11.2005
(73) Patentinhaber: Albrecht, Schoell, 84137 Vilsbiburg (DE)
(72) Erfinder: Albrecht, Schoell, 84137 Vilsbiburg (DE)
(74) Vertreter: Appelt, Christian W.

(56) Entgegenhaltungen:
- EP-A- 0 055 787
- WO-A-98/37371
- CH-A- 179 825
- DE-A- 3 543 248
- FR-A- 562 075
- FR-A- 805 874
- FR-A- 1 391 485
- GB-A- 665 620
- US-A- 4 432 147
- US-A- 5 862 609

## Beschreibung

Die Erfindung bezieht sich auf eine Vorrichtung, geeigent zum Trocknen von Holz, und auf ein Verfahren zum Betrieb der Vorrichtung, mit einer Trockenkammer in einem dicht verschließbaren Behälter zur Aufnahme von wenigstens einem Stapel des zu trocknenden Holzes, einer Luft im Behälter in einem Kreislauf bewegenden Luftumwälzeinrichtung, einer im als Luftkreislauf bezeichneten Kreislauf der Luftumwälzung vor den Holzstapeln angeordneten Luftheizeinrichtung und einer in diesem Luftkreislauf hinter den Holzstapeln angeordneten Luftkühleinrichtung zur Kondensierung der in der Luft enthaltenen Feuchtigkeit, wobei die Luftheizeinrichtung durch einen Strom von heißem Wärmetransportmedium gespeist ist und der heiße Wärmetransportmedium-Strom direkt oder indirekt durch einen Mediumheiz-Wärmetauscher, der ihn auf eine hohe Temperatur bringt, geleitet ist und das die Luftheizeinrichtung speisende Wärmetransportmedium in einem als Heizkreislauf bezeichneten Kreislauf geführt ist und sich im Heizkreislauf am Mediumheiz-Wärmetauscher oder zwischen dem Mediumheiz-Wärmetauscher und der Luftheizeinrichtung ein Zwischen-Sammelbehälter befindet, und der Mediumheiz-Wärmetauscher von einem Wärmepumpenkreislauf gespeist ist, der andererseits mit der Luftkühleinrichtung verbunden ist und von dieser die durch die Luftkühlung dem Luftkreislauf entzogenen Wärme in den Mediumheiz-Wärmetauscher des Heizkreislaufs pumpt.

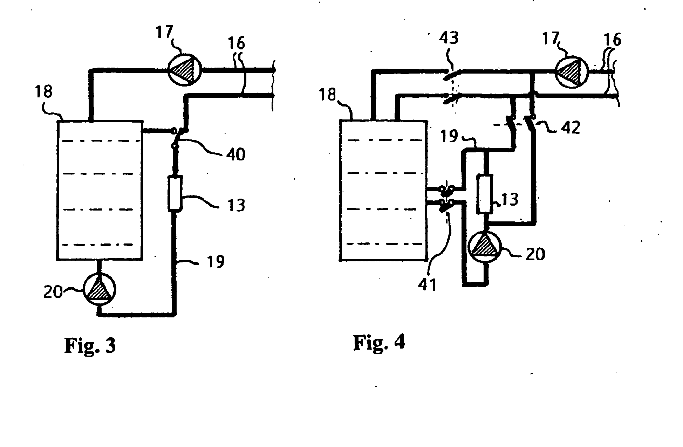

Eine solche, angenommerweise auch zum Trocknen von Holz geeignete Trocknungsvorrichtung ist bekannt aus derCH-A-179825, Fig. 3. Nach diesem Stand der Technik soll eine Überhitzung des Heizkreislaufs, der seine Wärme über eine Wärmepumpe von der Luftkühleinrichtung bezieht, vermieden werden, indem dem Heizkreislauf bei Bedarf kaltes Wasser eingeimpft wird. Mittels eines Überlaufrohrs im Zwischen-Sammelbehälter wird das eingespeiste Volumen an anderer Stelle wieder abgeschöpft.Im übrigen läuft das heiße Wasser durch den Zwischen-Sammelbehälter unverzögert durch.

Weitere, speziell für die Holztrocknung konzipierte Trocknungsvorrichtungen sind z.B. bekannt aus der DE 29611521 U. Die Behälter solcher Trocknungsvorrichtungen sind zumeist zylindrisch mit Durchmessern von 0,7 bis 2,3 m und einem Stapelraum von 1 m3 bis 60 m3, um die Größenordnung zu veranschaulichen. Es sind aber auch quaderförmige Trocknungsbehälter mit bis zu 100 m3 Inhalt bekannt. Der Behälter wird mit Holzstapeln beladen und dann dicht verschlossen, und mit Hilfe der umgewälzten Luft, die durch die Luftheizeinrichtung erhitzt wird, wird im allgemeinen zunächst das zu trocknende Holz erwärmt, und gleichzeitig und anschließend wird - gegebenenfalls bei durch eine Vakuumpumpe erzeugtem Unterdruck - mit Hilfe der Luftkühleinrichtung der Wasserdampf aus der im Behälter umgewälzten Luft auskondensiert. Anschließend wird der Behälter wieder geöffnet und entladen und sodann mit frischem Holz neu beladen, woraufhin das Verfahren erneut beginnt. Es sind Bemühungen bekannt, mit Hilfe einer Wärmepumpe die bei der Kondensation abgezogene Wärme wieder dem Heizvorgang nutzbar zu machen (DD 239463 A, DE 2942651 A, FR 1391485). Aufgrund der zeitlichen Verschiebung zwischen den verschiedenen Verfahrensphasen ist die Energieeinsparung aber noch nicht ideal.

Durch die Erfindung sollen der Energiezyklus optimiert und damit der Energieverbrauch weiter gedrosselt werden. Dies wird gemäß der Erfindung durch eine Vorrichtungskonstruktion ermöglicht, die dadurch gekennzeichnet ist, dass der Zwischen-Sammelbehälter mit seinem Inhalt an Wärmetransportmedium als Puffer-Wärmespeicher dient und der Heizkreislauf aus zwei parallel am Wärmespeicher angreifenden, über jeweilige Pumpen gesteuerten Teil-Heizkreisläufen besteht, von denen einer über die Luftheizeinrichtung und der andere über den Mediumheiz-Wärmetauscher geleitet ist. Diese Vorrichtung ist so betreibbar, dass bei der Kondensation rückgewonnene Wärme, selbst wenn zu dieser Zeit gerade keine Heizphase stattfindet, über den zweiten Teil-Heizkreislauf in den Wärmespeicher eingespeichert werden kann, bis sie nach erneutem Beladen des Behälters über den ersten Teil-Heizkreislauf zum Aufheizen der umgewälzten Luft eingesetzt wird. Die Wärmepumpe pumpt bei einer solchen Betriebsweise die Wärme also nicht unmittelbar von der Luftkühleinrichtung zur Luftheizeinrichtung im Behälter, sondern von der Luftkühleinrichtung direkt oder indirekt vorzugsweise zu einem externen Mediumheiz-Wärmetauscher, der seinerseits die Luftheizeinrichtung direkt oder erforderlichenfalls über den Wärmespeicher zeitversetzt mit Wärme versorgt. Das erfindungsgemäße energiesparende Verfahren sieht vor, dass man für aufeinanderfolgende Trocknungsvorgänge den Zwischen-Sammelbehälter als Wärmespeicher verwendet, indem man das Wärmetransportmedium des Heizkreislaufs getrennt in zwei Teil-Heizkreisläufen, die jeweils den Zwischen-Sammetbeälter enthalten und von denen direkt oder indirekt der erste mit der Luftkühleinrichtung und der zweite mit der Luftheizeinrichtung verbunden ist, umpumpt, und man den Energieabzug aus dem Trockenmittelkreislauf und die Energieeinspeisung in den Trockenmittelkreislauf zeitlich so entkoppelt, dass man beim Trocknen einer ersten Holzmenge während des Wärmeentzugs von der Luftkühleinrichtung die entzogene Wärme mindestens teilweise zur Aufheizung des Inhalts des Zwischen-Sammelbehälters verwendet und nach der Entnahme der ersten Holzmenge und der Beladung mit einer zweiten Holzmenge zum Aufheizen für das Trocknen der zweiten Holzmenge die im Zwischen-Sammelbehälter gespeicherte Wärme einsetzt, wodurch eine beträchtliche Energieerspamis ermöglicht wird.

Vorzugsweise ist die Luftkühleinrichtung durch einen Strom von kaltem Wärmetransportmedium gespeist und befindet sich im als Kühlkreislauf bezeichneten Kreislauf des die Luftkühleinrichtung speisenden Wärmetransportmediums ein Mediumkühl-Wärmetauscher, der in den Wärmepumpenkreislauf einbezogen ist und dem Kühlkreislauf die dem Wärmetauscher des Heizkreislaufs zuzuführende Wärme entzieht, und befindet sich auch im Kühlkreislauf, an seinem Mediumkühl-Wärmetauscher oder zwischen diesem und der Luftkühleinrichtung, ein Wärmespeicher. Auf diese Weise steht für die Kondensationsphase ein Kältespeicher zur Verfügung.

Vorzugsweise ist das Wärmetransportmedium für den Wärmetransport in und aus dem Behälter in an sich bekannter Weise warmes bzw. kaltes Wasser. Die Wärmespeicher können dann einfach Wasserkessel sein. Für den Wärmespeicher des Heizkreislaufs wird eine Wärmespeicherkapazität von wenigstens einem Viertel, vorzugsweise aber von wenigstens der Hälfte des Wärmeinhalts, den bei voller Beladung des Behälters mit Holz dieses Holz bei einer Abkühlung von 70° auf 0° abgibt, empfohlen. Wird als Wärmespeicher ein Wasserkessel verwendet, so hat der Wärmespeicher des Heizkreislaufs ein Speichervolumen z. B. in der Größenordnung von 5 bis 20 m³, vorzugsweise von 8 bis 16 m³.

Eine zweckmäßige, einfache und effiziente Lösung ergibt sich, wenn aus dem jeweiligen Wärmespeicher der erste Teil-Heizkreislauf und/oder der Kühlkreislauf unmittelbar gespeist ist und der jeweilige Medien-Wärmetauscher unmittelbar Wärme in den Wärmespeicher einspeist bzw. Wärme aus dem Wärmespeicher abzieht, wobei sich vorzugsweise die Wärmespeicher und der Mediumheiz-Wärmetauscher und der Mediumkühl-Wärmetauscher außerhalb des Behälters befinden, so daß sie keinen Nutzraum in Anspruch nehmen, für die Überwachung und Wartung leicht zugänglich sind und nicht durch die Temperaturbedingungen im Behälter beeinflußt sind.

Für den Heizkreislauf ist in an sich bekannter Weise vorzugsweise noch eine Zusatzheizung in Form einer Elektroheizung, Warmwasserheizung, Solarheizung oder sonst einer externen Wärmequelle einbezogen, mit deren Hilfe eine relativ hohe Temperatur des Wärmetransportmediums erzielt werden kann. Kühlkreislaufseitig kann auch noch eine Zusatzkühlung vorgesehen sein, z. B. durch einen Kaltwasseranschluß. Außerdem ist zweckmäßigerweise an den Behältern noch in an sich bekannter Weise eine Vakuumpumpe angeschlossen, um den Trocknungsvorgang zu beschleunigen.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig. 1: schematisch eine erfindungsgemäße Trocknungsvorrichtung mit einem Wärmespeicher nur im Heizkreislauf;
- Fig. 2: schematisch eine erfindungsgemäße Trocknungsvorrichtung mit je einem Wärmespeicher im Heizkreislauf und im Kühlkreislauf;
- Figur 3: und 4 den Wärmespeicher in abgewandelten Anschlußweisen.

Ein nur schematisch dargestellter, in der Technik an sich bekannter (DE G 9005827 U1, DE 29611521 U1, DE 2721256 A, DE 3543248 C) kesselartiger Behälter 1 zum Trocknen von Holz, beispielsweise von gestapeltem Bauholz, enthält in passender Anordnung in seinem Inneren Verdichter 2, die im Behälter 1 eine Luftumwälzung erzeugen, ferner im Luftstrom, bei der dargestellten Ausführung auf der Saugseite der Verdichter 2, eine Luftheizeinrichtung 3, auf der Druckseite der Verdichter 2 einen Raum zum Anordnen der Stapel des Holzes 4 und an einer Stelle, an der der durch die Stapel des Holzes 4 hindurchgetretene Luftstrom, mit Feuchtigkeit angereichert, aus diesem Stapel austritt, eine Luftkühleinrichtung 5, an der die Feuchtigkeit aus dem Luftstrom auskondensiert. Das entstehende Tropfwasser wird von einer Auffangwanne 6 aufgefangen und abgeleitet. An den Behälter 1 ist eine Vakuumpumpe 7 angeschlossen, um Trocknungsphasen mit Unterdruck zu ermöglichen.

In für derartige Holztrockner an sich bekannter Weise (DE 2821259 A, DD 239463 A) wird mit Hilfe einer Wärmepumpe eine Wärme-Rückführung von der Luftkühleinrichtung 5 zur Luftheizeinrichtung 3 durchgeführt. Die Wärmerückführung geschieht bei der dargestellten Ausführung mit Hilfe eines mit einer Kältemittelzirkulation arbeitenden Wärmepumpenkreislaufs 11, der in der Luftkühleinrichtung einen Verdampfer mit Wärmetauscher, im Verlauf des Kreislaufs einen Kältemittelkondensator 12 mit einem Kompressor und an dessen Ausgang einen Wärmetauscher 13 umfaßt.

Das der Luftheizeinrichtung 3 zugeführte Wärmetransportmittel ist heißes Wasser, das über Wasserrohre 16 und eine Pumpe 17 umgepumpt und so der Heizeinrichtung 3 zugeführt wird. Das Wasser kommt aus einem Wasserkessel 18 mit mehreren Kubikmetern Inhalt, dessen Inhalt als Wärmespeicher wirkt. Über eine Rohrleitung 19, die durch den Wärmetauscher 13 geführt ist, und eine Pumpe 20 wird der Inhalt des Kessels 18 zirkuliert und dabei im Wärmetauscher 13 aufgeheizt. Zur eventuell erforderlichen Ergänzung der Heizung ist eine elektrische Zusatzheizung über eine Zuleitung 21 anschließbar.

Die dargestellte Vorrichtung arbeitet folgendermaßen:

Nach dem Beladen des Behälters 1 mit dem Holz 4 wird zunächst über die Luftheizeinrichtung 3 der Behälterinnenraum einschließlich des Holzes 4 auf die erhöhte Trocknungstemperatur aufgeheizt, wobei die Verdichter 2 für eine gleichmäßige Wärmeverteilung sorgen. Nach Erreichen einer ausreichenden Temperatur wird - gegebenenfalls nach Einschalten der Vakuumpumpe 7 - bei aktiver Luftkühleinrichtung 5 der zirkulierenden Luft die Feuchtigkeit entzogen, wodurch das aufgeheizte Holz trocknet. Die Luftkühleinrichtung 5 wird mit abgekühltem Kältemittel gespeist, das diese Einrichtung 5 in aufgewärmtem Zustand wieder verläßt. Das Kältemittel wird dann mit Hilfe des Kältemittelkondensators 12 umgepumpt und kondensiert, wobei sich seine Temperatur weiter erhöht. Diese erhöhte Temperatur wird im Wärmetauscher 13 dem in der Rohrleitung 19 zirkulierenden Wasser übergeben, wobei das Kältemittel den Wärmetauscher 13 in abgekühltem Zustand verläßt und wieder zur Luftkühleinrichtung 5 fließt.

Der Wasservorrat im Wasserkessel 18 dient als Pufferspeicher. Er wird auf eine relativ hohe Temperatur aufgeheizt und speist dann die Luftheizeinrichtung 3, jedoch wird in dieser Betriebsphase der Wärmetauscher 13 noch nicht oder nur in geringem Umfang aus dem Wärmepumpenkreislauf 11 beschickt. Nach ausreichender Erwärmung des Holzes 4 setzt dessen Trocknung ein, gleichzeitig wird die Nässe des Luftkreislaufs durch Aktivieren der Luftkühleinrichtung 5 auskondensiert, wobei sich das Kältemittel im Wärmepumpenkreislauf 11 erwärmt und die Wärme über den Wärmetauscher 13 zum Kessel 18 übertragen wird. Während dieser Aufheizzeit des Kessels 18 wird das Holz 4 restlich getrocknet und dann dem Behälter 1 entnommen, woraufhin dieser mit neuem Holz beschickt wird. Bei der anschließenden Aufheizphase des neuen Holzes steht die im Kessel 18 gespeicherte Wärme zur Verfügung.

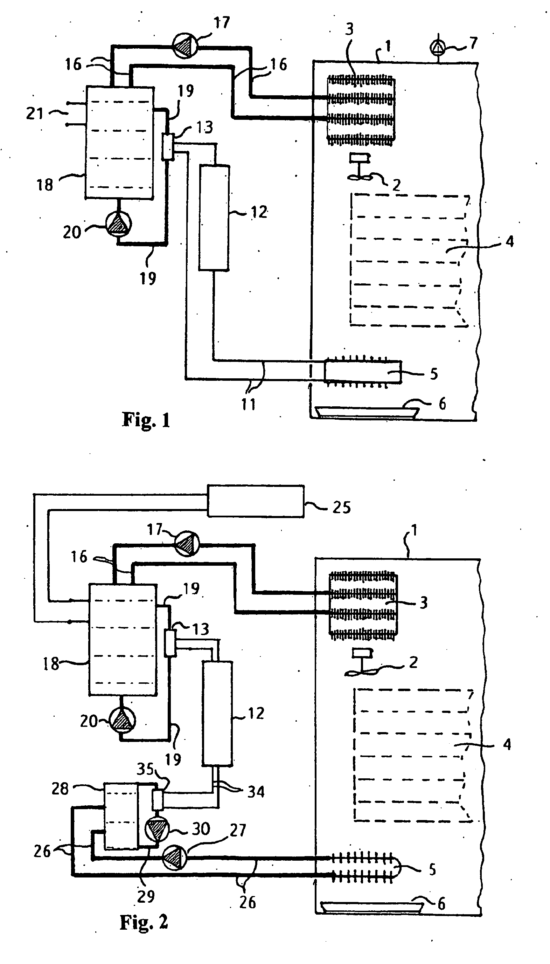

Bei der Anordnung nach Fig. 2 ist die Installation mit dem Wasserkessel 18 unverändert, als Zusatzheizung ist hier eine Solarheizung 25 angeschlossen. Anders gestaltet ist hier der Anschluß der Luftkühleinrichtung 5. Als Wärmetransportmedium für die Kühleinrichtung 5 dient nach Fig. 2 nicht, wie nach Fig. 1, das Kältemittel des Wärmepumpenkreislaufs, sondern ebenso wie bei der Luftheizeinrichtung 3 Wasser, das über Wasserrohre 26 und eine schaltbare Pumpe 27 von einem Wasserkessel 28 kommt, dessen Inhalt als Wärmespeicher dient, allerdings hier als negativer Wärmespeicher, aus dem ein Kälteschub entnehmbar ist. Aus dem Kessel 28 wird über eine Rohrleitung 29 und eine Pumpe 30 Wasser zirkuliert, das mit Hilfe eines dem Wärmepumpenkreislauf 11 entsprechenden Wärmepumpenkreislauf 34 in einem Verdampfer und Wärmetauscher 35 gekühlt wird. Das im Wärmepumpenkreislauf 34 zirkulierende Kältemittel durchsetzt, ebenso wie gemäß Fig. 1, den Kältemittelkondensator 12 und den Wärmetauscher 13 der Heizseite und entzieht im Wärmetauscher 35 dem Wasser des Kessels 28 Wärme, die es im Wärmetauscher 13 an das Wasser des Kessels 18 abgibt.

Der durch den Inhalt des Kessels 28 gebildete negativen Wärmespeicher erlaubt eine Wärmeentnahme bereits vor dem Einschalten der Pumpe 27 und erlaubt außerdem eine Kälteentnahme durch die Luftkühleinrichtung 5 auch zu Zeiten, in denen das Wasser im Kessel 18 bereits seine Höchsttemperatur erreicht hat.

Anhand der Fig.n 3 und 4 sind noch abweichende Möglichkeiten des Anschlusses des Kessels dargestellt, wobei für die Erläuterung auf dem Kessel 18 Bezug genommen wird.

Gemäß Fig. 3 ist wie bei Fig. 1 der Kreislauf mit der Rohrleitung 19 und der Pumpe 20 sowie dem in den Kreislauf eingeschaltenen Wärmetauscher 13 vorhanden, jedoch ist er unterbrechbar durch eine Weiche 40, die den Ausgangsanschluß des Wärmetauschers 13 unmittelbar an eines der Wasserrohre 16 anschließt. Durch Umschalten der Weiche 40 kann also entweder das Wasser im Kessel 18 aufgeheizt werden, oder der Wärmetauscher 13 und der Kessel 18 sind hintereinander unmittelbar in den Wasserkreislauf der Rohre 16 eingeschaltet.

Gemäß Fig. 4 ist in der zwischen dem Kessel 18 und dem Wärmetauscher 13 verlegten Rohrleitung 19 ein Absperrorgan 41 eingeschaltet, weiterhin ist der Wärmetauscher 13 über ein Absperrorgan 42 mit den die Luftheizeinrichtung 3 speisenden Wasserrohren 16 verbunden, und diese greifen über ein Absperrorgan 43 auf den Kessel 18 zu. Auch bei dieser Installation besteht die Möglichkeit, gemäß Fig. 1 zu arbeiten. Außerdem kann aber auch der Wärmekreislauf ohne Zwischenschaltung des Wärmespeichers direkt auf die Luftheizeinrichtung arbeiten.

## Patentansprüche

1. Vorrichtung zum Trocknen von Holz, mit einer Trockenkammer in einem dicht verschließbaren Behälter (1) zur Aufnahme von Stapeln des zu trocknenden Holzes (4), einer Luft im Behälter in einem Kreislauf bewegenden Luftumwälzeinrichtung (2), einer im als Luftkreislauf bezeichneten Kreislauf der Luftumwälzung angeordneten Luftheizeinrichtung (3) und einer in diesem Luftkreislauf hinter dem mit den Holzstapeln zu beladenden Raum angeordneten Luftkühleinrichtung (5) zur Kondensierung der in der Luft enthaltenen Feuchtigkeit, wobei die Luftheizeinrichtung (3) durch einen Strom von heißem Wärmetransportmedium gespeist ist und der heiße Wärmetransportmedium-Strom direkt oder indirekt durch einen Mediumheiz-Wärmetauscher (13), der ihn auf eine hohe Temperatur bringt, geleitet ist und das die Luftheizeinrichtung (3) speisende Wärmetransportmedium in einem als Heizkreislauf (16, 19) bezeichneten Kreislauf geführt ist und sich im Heizkreislauf am Mediumheiz-Wärmetauscher (13) oder zwischen dem Mediumheiz-Wärmetauscher (13) und der Luftheizeinrichtung (3) ein Zwischen-Sammelbehälter (18) befindet, und der Mediumheiz-Wärmetauscher (13) von einem Wärmepumpenkreislauf (11, 34) gespeist ist, der andererseits mit der Luftkühleinrichtung (5) verbunden ist und von dieser die durch die Luftkühlung dem Luftkreislauf entzogenen Wärme in den Mediumheiz-Wärmetauscher (13) des Heizkreislaufs pumpt, **dadurch gekennzeichnet, dass** der Zwischen-Sammelbehälter mit seinem Inhalt an Wärmetransportmedium als Puffer-Wärmespeicher (18) dient und der Heizkreislauf aus zwei parallel am Wärmespeicher angreifenden, über jeweilige Pumpen (17, 20) gesteuerten Teil-Heizkreisläufen (16, 19) besteht, von denen einer (16) über die Luftheizeinrichtung (3) und der andere (19) über den Mediumheiz-Wärmetauscher (13) geleitet ist.

2. Vorrichtung nach Anspruch 1, **dadurch gekennzeichnet, daß** die Luftkühleinrichtung (5) durch einen Strom von kaltem Wärmetransportmedium gespeist ist und sich im als Kühlkreislauf (26) bezeichneten Kreislauf des die Luftkühleinrichtung (5) speisenden Wärmetransportmediums ein Mediumkühl-Wärmetauscher (35) befindet, der in den Wärmepumpenkreislauf (34) einbezogen ist und dem Kühlkreislauf (26) die dem Wärmetauscher (13) des Heizkreislaufs (16) zuzuführende Wärme entzieht.

3. Vorrichtung nach Anspruch 1 oder 2, daß das Wärmetransportmedium des Heizkreislaufs (16) Wasser ist.

4. Vorrichtung nach Anspruch 3, **dadurch gekennzeichnet, daß** der Wärmespeicher ein in den Heizkreislauf einbezogener Wasserkessel (18) ist.

5. Vorrichtung nach einem der Ansprüche 1 bis 4, **dadurch gekennzeichnet, daß** der Wärmespeicher (18) eine Wärmespeicherkapazität hat, die wenigstens einem Viertel und vorzugsweise wenigstens der Hälfte des Wärmeinhalts gleicht, den bei voller Beladung des Behälters das darin gestapelte Holz (4) bei einer Abkühlung von 70° C auf 0° C abgibt.

6. Vorrichtung nach dem auf Anspruch 4 rückbezogenen Anspruch 5, **dadurch gekennzeichnet, daß** der Wasserkessel (18) ein Speichervolumen von 5 bis 20 m³, vorzugsweise von 8 bis 16 m³ hat.

7. Vorrichtung nach Anspruch 2 oder nach einem der auf Anspruch 2 rückbezogenen Ansprüche 3 bis 6, **dadurch gekennzeichnet, daß** sich auch im Kühlkreislauf (26), an seinem Mediumkühl-Wärmetauscher (35) oder zwischen diesem und der Luftkühleinrichtung (5), ein Wärmespeicher (28) befindet.

8. Vorrichtung nach Anspruch 7, **dadurch gekennzeichnet, daß** das Wärmetransportmedium des Kühlkreislaufs (26) Wasser ist und der Wärmespeicher des Kühlkreislaufs ein in den Kühlkreislauf einbezogener Wasserkessel (28) ist.

9. Vorrichtung nach Anspruch 8, **dadurch gekennzeichnet, daß** der Wasserkessel (28) ein Speichervolumen von 0,25 bis 1,5 m³, vorzugsweise von 0,4 bis 1 m³ hat.

10. Vorrichtung nach einem der Ansprüche 1 bis 9, **dadurch gekennzeichnet, daß** aus dem jeweiligen Wärmespeicher (18, 28) der erste Teil-Heizkreislauf (16) und/oder der Kühlkreislauf (26) unmittelbar gespeist ist und der jeweilige Medien-Wärmetauscher (13, 35) unmittelbar Wärme in den Wärmespeicher (18) einspeist bzw. Wärme aus dem Wärmespeicher (28) entzieht.

11. Vorrichtung nach einem der Ansprüche 1 bis 10, **dadurch gekennzeichnet, daß** sich der bzw. die Wärmespeicher (18, 28) außerhalb des Behälters (1) befinden.

12. Vorrichtung nach einem der Ansprüche 1 bis 11, **dadurch gekennzeichnet, daß** sich der Mediumheiz-Wärmetauscher (13) und/oder der Mediumkühl-Wärmetauscher (35) außerhalb des Behälters (1) befinden.

13. Vorrichtung nach einem der Ansprüche 1 bis 12, **dadurch gekennzeichnet, daß** in den Heizkreislauf noch wenigstens eine Zusatzheizung (21, 25) einbezogen ist.

14. Vorrichtung nach Anspruch 13, **dadurch gekennzeichnet, daß** die wenigstens eine Zusatzheizung eine Solarheizung (25) umfaßt.

15. Vorrichtung nach einem der Ansprüche 1 bis 14, **dadurch gekennzeichnet, daß** an den Behälter (1) eine Vakuumpumpe (7) angeschlossen ist.

16. Verfahren zum Betrieb einer Vorrichtung zum Trocknen von Holz, mit einer Trockenkammer in einem dicht verschließbaren Behälter (1) zur Aufnahme von Stapeln des zu trocknenden Holzes (4), einer Luft im Behälter in einem Kreislauf bewegenden Luftumwälzeinrichtung (2), einer im als Luftkreislauf bezeichneten Kreislauf der Luftumwälzung angeordneten Luftheizeinrichtung (3) und einer in diesem Luftkreislauf hinter dem mit den Holzstapeln zu beladenden Raum angeordneten Luftkühleinrichtung (5) zur Kondensierung der in der Luft enthaltenen Feuchtigkeit, wobei die Luftheizeinrichtung (3) durch einen Strom von heißem Wärmetransportmedium gespeist ist und der heiße Wärmetransportmedium-Strom direkt oder indirekt durch einen Mediumheiz-Wärmetauscher (13), der ihn auf eine hohe Temperatur bringt, geleitet ist und das die Luftheizeinrichtung (3) speisende Wärmetransportmedium in einem als Heizkreislauf (16, 19) bezeichneten Kreislauf geführt ist und sich im Heizkreislauf am Mediumheiz-Wärmetauscher (13) oder zwischen dem Mediumheiz-Wärmetauscher (13) und der Luftheizeinrichtung (3) ein Zwischen-Sammelbehälter (18) befindet, und der Mediumheiz-Wärmetauscher (13) von einem Wärmepumpenkreislauf (11, 34) gespeist ist, der andererseits mit der Luftkühleinrichtung (5) verbunden ist und von dieser die durch die Luftkühlung dem Luftkreislauf entzogenen Wärme in den Mediumheiz-Wärmetauscher (13) des Heizkreislaufs pumpt, insbesondere nach einem der Ansprüche bis 15, **dadurch gekennzeichnet, dass** man für aufeinanderfolgende Trocknungsvorgänge den Zwischen-Sammelbehälter (18) als Wärmespeicher verwendet, indem man das Wärmetransportmedium des Heizkreislaufs getrennt in zwei Teil-Heizkreisläufen (16, 19), die jeweils den Zwischen-Sammelbeälter (18) enthalten und von denen direkt oder indirekt der erste (19) mit der Luftkühleinrichtung (5) und der zweite (16) mit der Luftheizeinrichtung (3) verbunden ist, umpumpt, und man den Wärmeabzug aus dem Trockenmittelkreislauf und die Wärmeeinspeisung in den Trockenmittelkreislauf zeitlich so entkoppelt, dass man beim Trocknen einer ersten Holzmenge während des Wärmeentzugs von der Luftkühleinrichtung (5) die entzogene Wärme mindestens teilweise zur Aufheizung des Inhalts des Zwischen-Sammelbehälters (18) verwendet und nach der Entnahme der ersten Holzmenge und der Beladung mit einer zweiten Holzmenge zum Aufheizen für das Trocknen der zweiten Holzmenge die im Zwischen-Sammelbehälter (18) gespeicherte Wärme einsetzt.

## Claims

1. Apparatus for drying wood, comprising a drying chamber within a tightly sealable receptacle (1) for accommodating stacks of the wood (4) to be dried, an air circulating device (2) which moves the air inside the receptacle in a circuit, an air heating device (3) which is arranged within the circuit for circulating the air referred to as the air circuit, and an air cooling device (5) which is arranged within this air circuit behind the space to be loaded with the stacks of wood and which is intended for condensing the moisture contained in the air, wherein the air heating device (3) is supplied with a stream of hot heat transfer medium and the hot heat transfer medium stream is passed directly or indirectly through a medium-heating heat exchanger (13) which brings it to a high temperature, and the heat transfer medium supplying the air heating device (3) is guided in a circuit referred to as the heating circuit (16, 19), and an intermediate collecting vessel (18) is located in the heating circuit at the medium-heating heat exchanger (13) or between the medium-heating heat exchanger (13) and the air heating device (3), and the medium-heating heat exchanger (13) is supplied by a heat pump circuit (11, 34) which is connected at the other side to the air cooling device (5) and from this pumps the heat withdrawn from the air circuit by the air cooling to the medium-heating heat exchanger (13) of the heating circuit, **characterised in that** the intermediate collecting vessel with its content of heat transfer medium serves as a buffer heat store (18), and the heating circuit consists of two partial heating circuits (16, 19) which act on the heat store in parallel and are controlled via respective pumps (17, 20), one (16) of said partial heating circuits being passed through the air heating device (3) and the other (19) being passed through the medium-heating heat exchanger (13).

2. Apparatus according to claim 1, **characterised in that** the air cooling device (5) is supplied by a stream of cold heat transfer medium and a medium-cooling heat exchanger (35) is located in the circuit of the heat transfer medium supplying the air cooling device (5), referred to as the cooling circuit (26), said medium-cooling heat exchanger (35) being incorporated in the heat pump circuit (34) and withdrawing from the cooling circuit (26) the heat that is to be supplied to the heat exchanger (13) of the heating circuit (16).

3. Apparatus according to claim 1 or 2, **characterised in that** the heat transfer medium of the heating circuit (16) is water.

4. Apparatus according to claim 3, **characterised in that** the heat store is a water boiler (18) incorporated in the heating circuit.

5. Apparatus according to one of claims 1 to 4, **characterised in that** the heat store (18) has a heat storage capacity that is equal to at least one quarter and preferably to at least one half of the heat content which, when the receptacle is fully loaded, is output by the wood (4) stacked therein when cooled from 70°C to 0°C.

6. Apparatus according to claim 5 referring back to claim 4, **characterised in that** the water boiler (18) has a storage volume of 5 to 20 m³, preferably 8 to 16 m³.

7. Apparatus according to claim 2 or according to one of claims 3 to 6 referring back to claim 2, **characterised in that** a heat store (28) is also located in the cooling circuit (26), at its medium-cooling heat exchanger (35) or between the latter and the air cooling device (5).

8. Apparatus according to claim 7, **characterised in that** the heat transfer medium of the cooling circuit (26) is water and the heat store of the cooling circuit is a water boiler (28) incorporated in the cooling circuit.

9. Apparatus according to claim 8, **characterised in that** the water boiler (28) has a storage volume of 0.25 to 1.5 m³, preferably 0.4 to 1 m³.

10. Apparatus according to one of claims 1 to 9, **characterised in that** the first partial heating circuit (16) and/or the cooling circuit (26) is supplied directly from the respective heat store (18, 28), and the respective medium heat exchanger (13, 35) supplies heat directly into the heat store (18) or withdraws heat directly from the heat store (28).

11. Apparatus according to one of claims 1 to 10, **characterised in that** the heat store(s) (18, 28) is/are located outside the receptacle (1).

12. Apparatus according to one of claims 1 to 11, **characterised in that** the medium-heating heat exchanger (13) and/or the medium-cooling heat exchanger (35) is/are located outside the receptacle (1).

13. Apparatus according to one of claims 1 to 12, **characterised in that** at least one additional heating system (21, 25) is incorporated in the heating circuit.

14. Apparatus according to claim 13, **characterised in that** the at least one additional heating system comprises a solar heating system (25).

15. Apparatus according to one of claims 1 to 14, **characterised in that** a vacuum pump (7) is connected to the receptacle (1).

16. Method for operating an apparatus for drying wood, comprising a drying chamber within a tightly sealable receptacle (1) for accommodating stacks of the wood (4) to be dried, an air circulating device (2) which moves the air inside the receptacle in a circuit, an air heating device (3) which is arranged within the circuit for circulating the air referred to as the air circuit, and an air cooling device (5) which is arranged within this air circuit behind the space to be loaded with the stacks of wood and which is intended for condensing the moisture contained in the air, wherein the air heating device (3) is supplied with a stream of hot heat transfer medium and the hot heat transfer medium stream is passed directly or indirectly through a medium-heating heat exchanger (13) which brings it to a high temperature, and the heat transfer medium supplying the air heating device (3) is guided in a circuit referred to as the heating circuit (16, 19), and an intermediate collecting vessel (18) is located in the heating circuit at the medium-heating heat exchanger (13) or between the medium-heating heat exchanger (13) and the air heating device (3), and the medium-heating heat exchanger (13) is supplied by a heat pump circuit (11, 34) which is connected at the other side to the air cooling device (5) and from this pumps the heat withdrawn from the air circuit by the air cooling to the medium-heating heat exchanger (13) of the heating circuit, in particular according to one of claims 1 to 15, **characterised in that**, for successive drying processes, the intermediate collecting vessel (18) is used as a heat store by pumping around the heat transfer medium of the heating circuit, separated into two partial heating circuits (16, 19) which in each case contain the intermediate collecting vessel (18) and of which the first (19) is directly or indirectly connected to the air cooling device (5) and the second (16) is directly or indirectly connected to the air heating device (3), and by temporally decoupling the heat withdrawal from the drying medium circuit and the heat supply to the drying medium circuit in such a way that, when drying a first quantity of wood during the withdrawal of heat from the air cooling device (5), the withdrawn heat is at least partially used for heating the contents of the intermediate collecting vessel (18) and, after removing the first quantity of wood and loading a second quantity of wood, the heat stored in the intermediate collecting vessel (18) is used for heating in order to dry the second quantity of wood.

## Revendications

1. Dispositif de séchage du bois, avec une chambre de séchage dans un récipient (1) susceptible d'être fermé de manière étanche, pour recevoir des piles du bois (4) à sécher, un dispositif de circulation d'air (2) déplaçant en un circuit de l'air dans le récipient, un dispositif de chauffage d'air (3), disposé dans le circuit, qualifié de circuit d'air, de la circulation d'air, et un dispositif de refroidissement d'air (5), disposé en aval de l'enceinte à charger des piles de bois, dans ce circuit d'air, de manière à condenser l'humidité contenue dans l'air, le dispositif de chauffage d'air (3) étant alimenté par un flux de fluide caloporteur chaud, et le flux de fluide caloporteur chaud étant guidé, directement ou indirectement, à travers un échangeur de chaleur de chauffage de fluide (13), le portant à une température élevée, et le fluide caloporteur alimentant le dispositif de chauffage d'air (3) étant guidé dans un circuit qualifié de circuit de chauffage (16, 19) et un récipient de collecte intermédiaire (18) se trouvant, dans le circuit de chauffage, à l'échangeur de chaleur de chauffage de fluide (13), ou entre l'échangeur de chaleur de chauffage de fluide (13) et le dispositif de chauffage d'air (3), et l'échangeur de chaleur de chauffage de fluide (13) étant alimenté par un circuit de pompe à chaleur (11, 34), relié d'autre part au dispositif de refroidissement d'air (5) et pompant par celui-ci la chaleur, prélevée du circuit d'air, du fait du refroidissement de l'air, pour l'introduire dans l'échangeur de chaleur de chauffage de fluide (13) du circuit de chauffage, **caractérisé en ce que** le récipient de collecte intermédiaire sert, par son contenu en fluide caloporteur, d'accumulateur de chaleur tampon (18) et le circuit de chauffage est composé de deux circuits de chauffage partiels (16, 19) commandés par des pompes (17, 20) respectives, agissant parallèlement sur l'accumulateur de chaleur, dont l'un (16) passe par le dispositif de chauffage d'air (3) et l'autre (19) passe par l'échangeur de chaleur de chauffage de fluide (13).

2. Dispositif selon la revendication 1, **caractérisé en ce que** le dispositif de refroidissement d'air (5) est alimenté par un flux de fluide caloporteur froid et un échangeur de chaleur de refroidissement de fluide (35), intégré dans le circuit de pompe à chaleur (34) et prélevant du circuit de refroidissement (26) la chaleur à amener à l'échangeur de chaleur de chauffage de fluide (13) du circuit de chauffage (16), se trouve dans le circuit, qualifié de circuit de refroidissement (26), du fluide caloporteur alimentant le dispositif de refroidissement d'air (5).

3. Dispositif selon la revendication 1 ou 2, **caractérisé en ce que** le fluide caloporteur du circuit de chauffage (16) est de l'eau.

4. Dispositif selon la revendication 3, **caractérisé en ce que** l'accumulateur de chaleur est une chaudière à eau (18) intégrée dans le circuit de chauffage.

5. Dispositif selon l'une des revendications 1 à 4,
**caractérisé en ce que** l'accumulateur de chaleur (18) présente une capacité d'accumulation de chaleur égale au moins à un quart et, de préférence, à au moins la moitié du contenu en chaleur que délivre, dans le cas où le récipient est complètement chargé, le bois (4) y étant empilé, lors d'un refroidissement de 70°C à 0°C.

6. Dispositif selon la revendication 5, se référant à la revendication 4, **caractérisé en ce que** la chaudière à eau (18) est d'un volume d'accumulation compris dans la fourchette de 5 à 20 m³, de préférence de 8 à 16 m³.

7. Dispositif selon la revendication 2 ou selon l'une des revendications 3 à 6, se référant à la revendication 2, **caractérisé en ce qu'**un accumulateur de chaleur (28) se trouve également dans le circuit de refroidissement (26), à son échangeur de chaleur de refroidissement de fluide (35), ou entre celui-ci et le dispositif de refroidissement d'air (5).

8. Dispositif selon la revendication 7, **caractérisé en ce que** le fluide caloporteur du circuit de refroidissement (26) est de l'eau et l'accumulateur de chaleur du circuit de refroidissement est une chaudière à eau (28) intégrée dans le circuit de refroidissement.

9. Dispositif selon la revendication 8, **caractérisé en ce que** la chaudière à eau (28) est d'un volume d'accumulation compris dans la fourchette de 0,25 à 1,5 m³, de préférence de 0,4 à 1 m³.

10. Dispositif selon l'une des revendications 1 à 9,
**caractérisé en ce que** le premier circuit partiel de chauffage (16) et/ou le circuit de refroidissement (26) est/sont directement alimenté(s) à partir de l'accumulateur de chaleur (18, 28) respectif et l'échangeur de chaleur pour fluide (13, 35) respectif injecte directement de la chaleur dans l'accumulateur de chaleur (18), ou prélève directement de la chaleur à partir de l'accumulateur de chaleur (28).

11. Dispositif selon l'une des revendications 1 à 10, **caractérisé en ce que** le ou les accumulateur(s) de chaleur (18, 28) se trouve(nt) à l'extérieur du récipient (1).

12. Dispositif selon l'une des revendications 1 à 11, **caractérisé en ce que** l'échangeur de chaleur de chauffage de fluide (13) et/ou l'échangeur de chaleur de refroidissement de fluide (35) se trouve(nt) à l'extérieur du récipient (1).

13. Dispositif selon l'une des revendications 1 à 12, **caractérisé en ce qu'**encore au moins un chauffage additionnel (21, 25) est intégré dans le circuit de chauffage.

14. Dispositif selon la revendication 13, **caractérisé en ce que** le au moins un chauffage additionnel comprend un chauffage solaire (25).

15. Dispositif selon l'une des revendications 1 à 14, **caractérisé en ce qu'**une pompe à vide (7) est raccordée au récipient (1).

16. Procédé de fonctionnement d'un dispositif de séchage du bois, avec une chambre de séchage dans un récipient (1) susceptible d'être fermé de manière étanche, pour recevoir des piles du bois (4) à sécher, un dispositif de circulation d'air (2) déplaçant en un circuit de l'air dans le récipient, un dispositif de chauffage d'air (3), disposé dans un circuit, qualifié de circuit d'air, de la circulation d'air, et un dispositif de refroidissement d'air (5), disposé en aval de l'enceinte à charger des piles de bois, dans ce circuit d'air, de manière à condenser l'humidité contenue dans l'air, le dispositif de chauffage d'air (3) étant alimenté par un flux de fluide caloporteur chaud, et le flux de fluide caloporteur chaud étant guidé, directement ou indirectement, à travers un échangeur de chaleur de chauffage de fluide (13), le portant à une température élevée, et le fluide caloporteur alimentant le dispositif de chauffage d'air (3) étant guidé dans un circuit qualifié de circuit de chauffage (16, 19) et un récipient de collecte intermédiaire (18) se trouvant, dans le circuit de chauffage, à l'échangeur de chaleur de chauffage de fluide (13), ou entre l'échangeur de chaleur de chauffage de fluide (13) et le dispositif de chauffage d'air (3), et l'échangeur de chaleur de chauffage de fluide (13) étant alimenté par un circuit de pompe à chaleur (11, 34), relié d'autre part au dispositif de refroidissement d'air (5) et pompant par celui-ci la chaleur, prélevée du circuit d'air, du fait du refroidissement de l'air, pour l'introduire dans l'échangeur de chaleur de chauffage de fluide (13) du circuit de chauffage, en particulier selon l'une des revendications 1 à 15, **caractérisé en ce que,** pour des processus de séchage successifs, on utilise le récipient de collecte intermédiaire (18) comme accumulateur de chaleur, **en ce que** l'on procède à un pompage de circulation du fluide caloporteur du circuit de chauffage séparément dans deux circuits de chauffage partiels (16, 19), contenant chacun le récipient de collecte intermédiaire (18) et dont, directement ou indirectement, le premier (19) est relié au dispositif de refroidissement d'air (5) et le deuxième (16) est relié au dispositif de chauffage d'air (3), et l'on désaccouple temporellement l'extraction de chaleur à partir du circuit de fluide de séchage et l'injection de chaleur dans le circuit de fluide de séchage, de manière que, lors du séchage d'une première quantité de bois, pendant le prélèvement de chaleur par le dispositif de refroidissement d'air (5), la chaleur prélevée soit au moins partiellement utilisée pour le chauffage du contenu du récipient de collecte intermédiaire (18) et que, après le prélèvement de la première quantité de bois et le chargement avec une deuxième quantité de bois, la chaleur stockée dans le récipient de collecte intermédiaire (18) soit utilisée pour le chauffage nécessaire au séchage de la deuxième quantité de bois.
